# EUROPEAN PATENT APPLICATION

(11) **EP 4 692 894 A1**
(43) Date of publication of application: **11.02.2026**
(21) Application number: 24777952.3
(22) Date of filing: 25.03.2024
(51) Int. Cl.: G02B 27/01

(54) **HEAD-MOUNTED ELECTRONIC DEVICE**

(30) Priority: 30.03.2023 CN 202310335107
(71) Applicant: Vivo Mobile Communication Co., Ltd., Dongguan, Guangdong 523863 (CN)
(72) Inventor: XIAO, Junhui, Dongguan, Guangdong 523863 (CN); LIN, Jiantang, Dongguan, Guangdong 523863 (CN)
(74) Representative: Murgitroyd & Company
(86) International application number: PCT/CN2024/083461
(87) International publication number: WO 2024/199163

(57) **Abstract**

The present application discloses a head-mounted electronic device belonging to the field of electronic devices. The head-mounted electronic device includes a device body, a strap, a functional part, and a first battery. The device body includes a display part, and opposite ends of the device body are connected to the strap. The functional part is mounted on the strap and is disposed opposite to the device body. At least one of the device body and the functional part is detachably connected to the first battery.

## Description

### CROSS-REFERENCE TO RELATED APPLICATIONS

The present application claims priority to Chinese Patent Application No. 202310335107.0, filed with the China National Intellectual Property Administration on March 30, 2023 and entitled "HEAD-MOUNTED ELECTRONIC DEVICE", which is incorporated herein by reference in its entirety.

### TECHNICAL FIELD

The present application belongs to the technical field of electronic devices, and specifically relates to a head-mounted electronic device.

### BACKGROUND

With the advancement of technology, intelligent electronic devices have also developed in a diversified manner, such as common handheld electronic devices like mobile phones and tablets, and relatively niche head-mounted electronic devices like augmented reality (augmented reality, AR) devices and virtual reality (virtual reality, VR) devices. To ensure that the head-mounted electronic device can work normally, the head-mounted electronic device also needs to be equipped with a battery. Generally, to facilitate use by a user in a reclining state, the battery is generally front-mounted in a device, so that only relatively light and thin components such as a strap are disposed at the rear of the user's head. However, when the user uses the electronic device with the front-mounted battery in an upright or a sitting state, the center of gravity of the device is located in front of the user's head, so that the device easily falls, seriously affecting the wearing stability of the device.

### SUMMARY

An objective of embodiments of the present application is to provide a head-mounted electronic device to solve the problem of corresponding usage defects in the current head-mounted electronic device whose battery is either front-mounted or rear-mounted.

An embodiment of the present application discloses a head-mounted electronic device. The device includes a device body, a strap, a functional part, and a first battery. The device body includes a display part, and opposite ends of the device body are connected to the strap. The functional part is mounted on the strap and is disposed opposite to the device body. At least one of the device body and the functional part is detachably connected to the first battery.

An embodiment of the present application discloses a head-mounted electronic device including a device body and a strap connected to two opposite ends of the device body, so that the head-mounted electronic device can be worn by a user on the head for use. Moreover, a functional part is mounted on the strap, and the functional part is disposed opposite to the device body. Meanwhile, at least one of the device body and the functional part may be detachably connected to the first battery of the head-mounted electronic device, so that the mounting status of the first battery can be adjusted according to the user's usage requirements. Specifically, in a case that the user uses the head-mounted electronic device in a reclining state, the user may choose not to mount the first battery on the functional part located at the rear of the user's head to reduce the quantity and thickness of components padded under the user's head, improving the usage comfort of the device. In a case that the user uses the head-mounted electronic device in an upright or a sitting state, the first battery may be mounted on the functional part to balance the weight of the device body by using the weight of the first battery, so that the center of gravity of the head-mounted electronic device is relatively closer to the center of the user's head, improving the wearing stability of the device.

### BRIEF DESCRIPTION OF THE DRAWINGS

The accompanying drawings described herein are used to provide a further understanding of the present application, and form part of the present application. Exemplary Embodiments of the present application and descriptions thereof are used to explain this application, and do not constitute any inappropriate limitation to this application. In the accompanying drawings:
FIG. 1 to FIG. 4 are schematic diagrams of a head-mounted electronic device in different states according to an embodiment of the present application;
FIG. 5 is a structural diagram of a head-mounted electronic device according to an embodiment of the present application;
FIG. 6 is a sectional view taken along a line A-A of the structure in FIG. 5;
FIG. 7 and FIG. 8 are schematic diagrams of part structure in different directions including a first knob in a head-mounted electronic device according to an embodiment of the present application;
FIG. 9 is a schematic diagram of part structure including a functional part in a head-mounted electronic device according to an embodiment of the present application;
FIG. 10 is a schematic diagram of part structure including a first knob in a head-mounted electronic device according to an embodiment of the present application;
FIG. 11 is a structural diagram of a first mounting part according to an embodiment of the present application;
FIG. 12 is an exploded view of a first mounting part according to an embodiment of the present application;
FIG. 13 and FIG. 14 are cross-sectional views of a first mounting part in different states according to an embodiment of the present application;
FIG. 15 and FIG. 16 are schematic diagrams of part structure in different directions including a first battery in a head-mounted electronic device according to an embodiment of the present application;
FIG. 17 is a sectional view of the structure in FIG. 15;
FIG. 18 is a structural diagram of a third mounting part in a head-mounted electronic device according to an embodiment of the present application; and
FIG. 19 to FIG. 21 are schematic diagrams of a process of detaching a first mounting part and a third mounting part in a head-mounted electronic device according to an embodiment of the present application.

Descriptions of reference numerals:
100-Device body, 110-Second mounting part, 120-Housing
210-First strap, 220-Second strap
300-Functional part, 310-First mounting part, 311-Base body, 3111-Accommodating cavity, 3112-Detaching hole, 3113-Limiting hole, 312-Slider, 3121-Sliding groove, 313-Limiting piece, 314-First elastic piece, 320-Anti-rotation limiting protrusion, 330-Connection part, 340-Ratchet, and 350-base portion
400-First battery, 410-Body, 420-Third mounting part, 421-Limiting part, 4211-Inner cavity, 4212-Limiting groove, 422-Button, 4221-Cap body, 423-Second elastic piece, 424-Clip, 425-Second knob, 426-First limiting structure, 430-Housing body, 431-Anti-rotation limiting groove, 440-Boss
510-Gear, 520-Rack, 530-First knob, 531-Mounting hole, 532-Second limiting structure, 533-First clip groove, 540-Circlip, 550-Self-locking piece, 551-Mounting part, 552-Elastic arm, 560-Toggle rib
610-First electrical connection part, 620-Second electrical connection part, and 630-Electrical connection jack

### DETAILED DESCRIPTION

Technical solutions in Embodiments of the present application are clearly described below with reference to accompanying drawings in Embodiments of the present application. Apparently, the described embodiments are merely some rather than all Embodiments of the present application. All other embodiments obtained by a person of ordinary skill in the art based on the Embodiments of the present application without making creative efforts shall fall within the protection scope of the present application.

In the specification and the claims of the present application, the terms "first" and "second" are used to distinguish similar objects, but are not used to describe a specific sequence or order. It should be understood that data used in this way are interchangeable in proper circumstances, so that the Embodiments of the present application can be implemented in another sequence other than those illustrated or described herein. In addition, the objects distinguished by "first" and "second" generally belong to the same category and a quantity of the objects is not limited. For example, there may be one or more first objects. In addition, in the specification and the claims, "and/or" indicates at least one of connected objects, and the character "/" generally indicates an "or" relationship between associated objects.

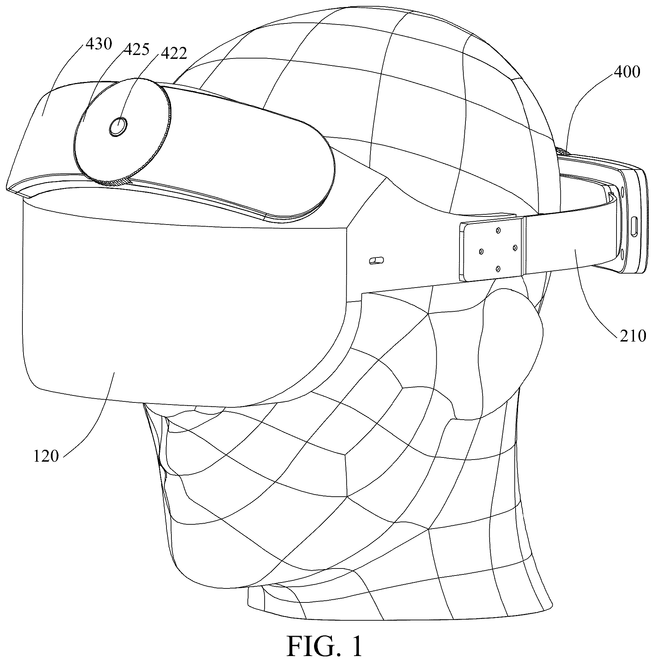

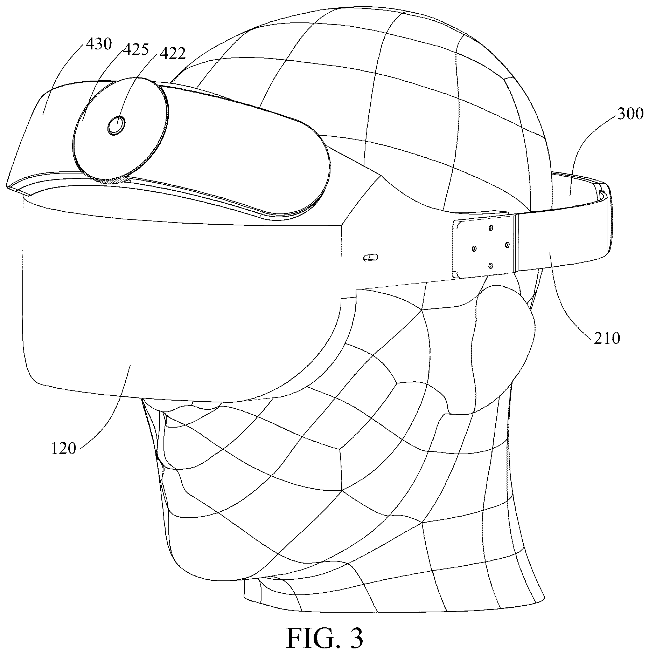

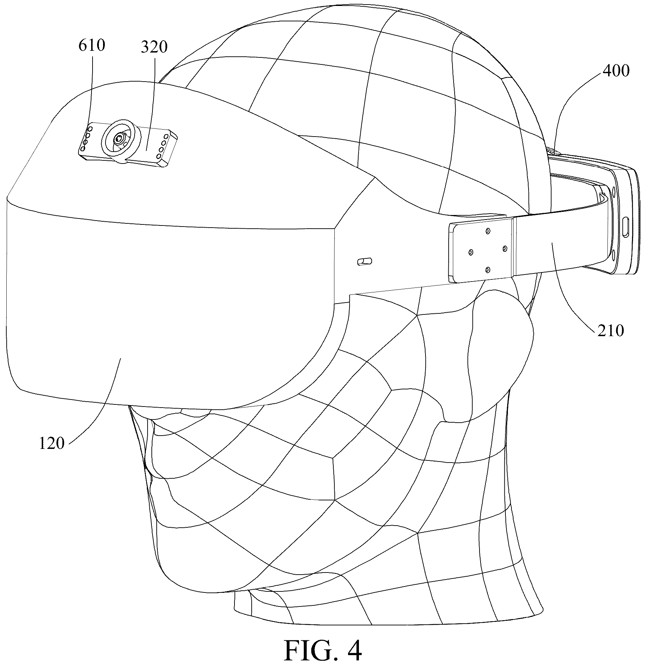

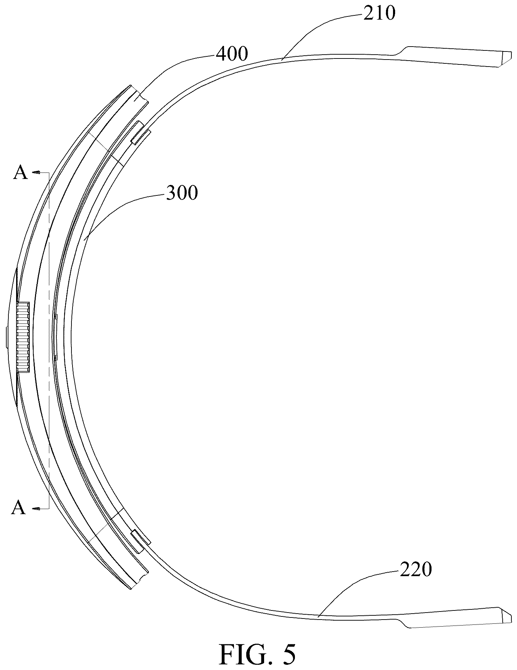

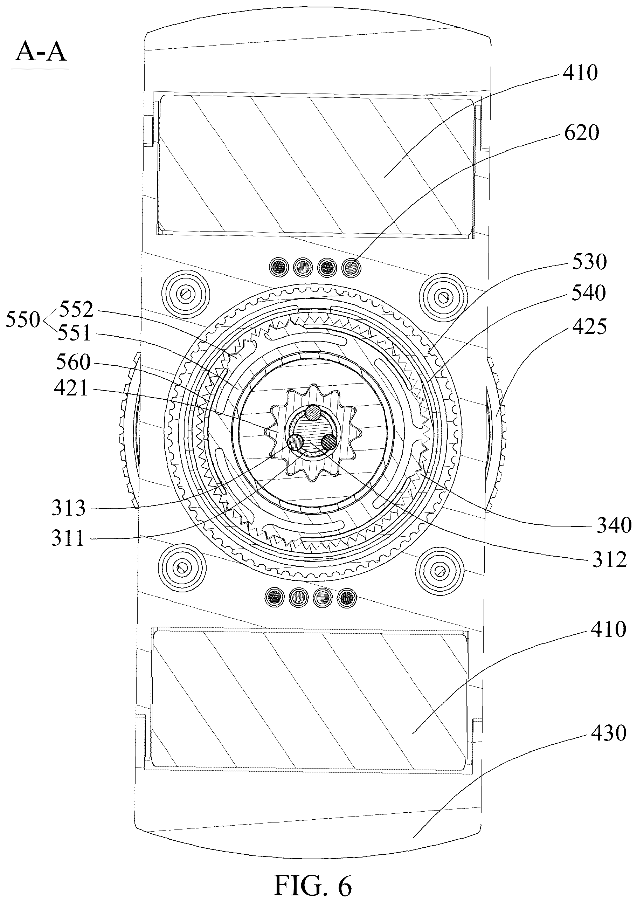

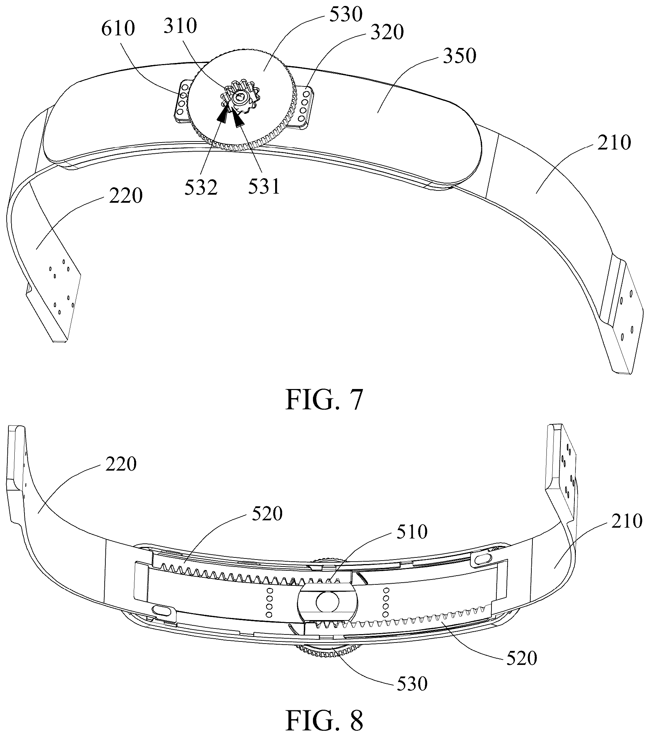

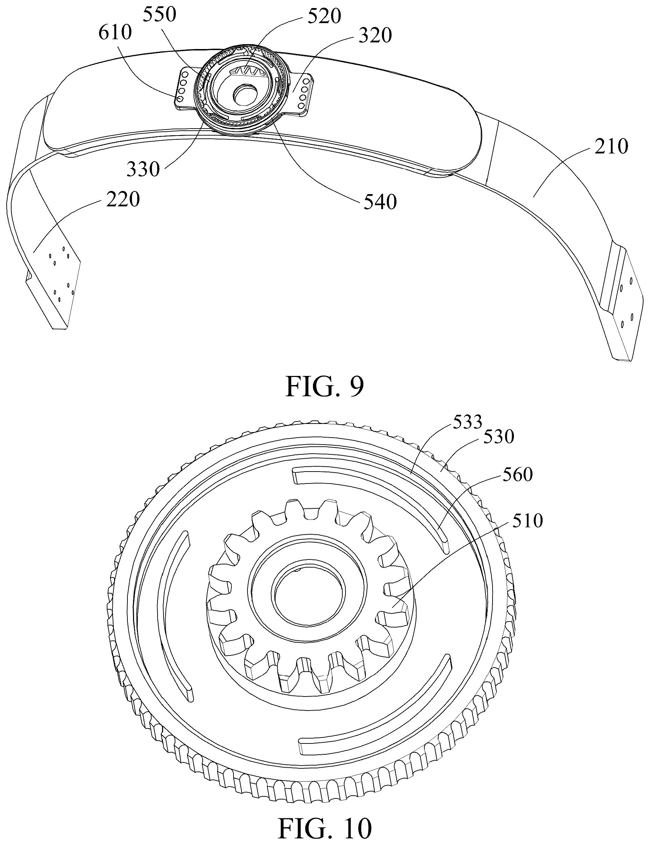

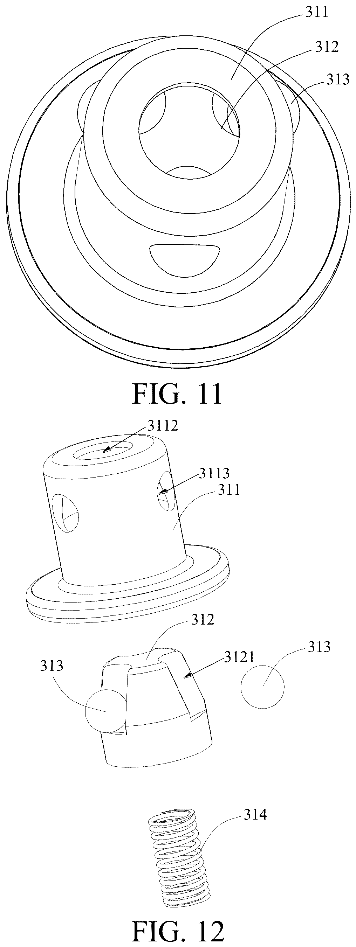

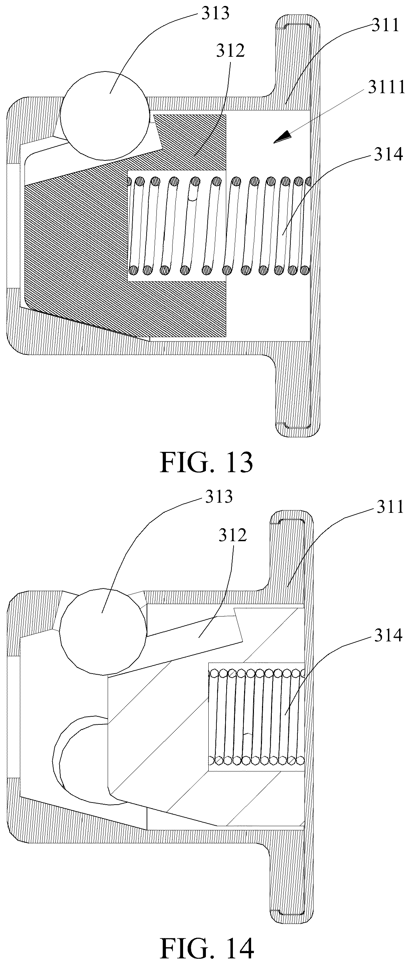

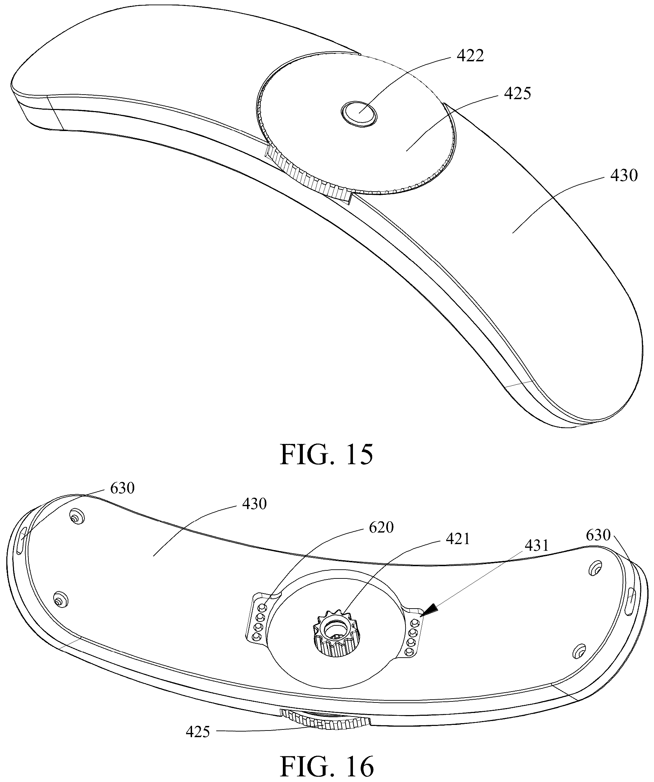

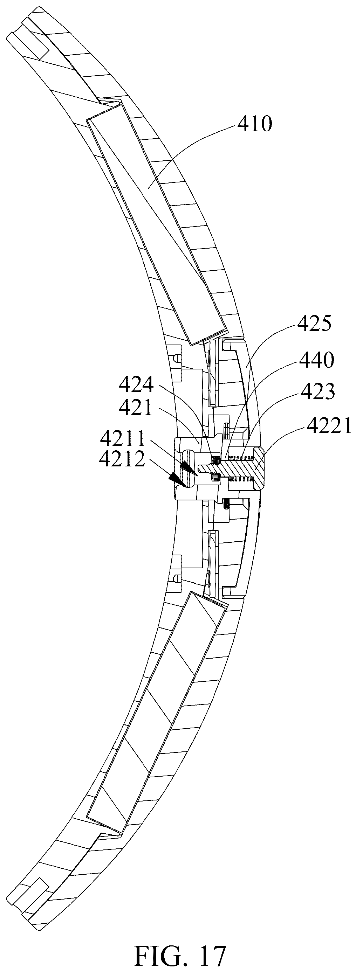

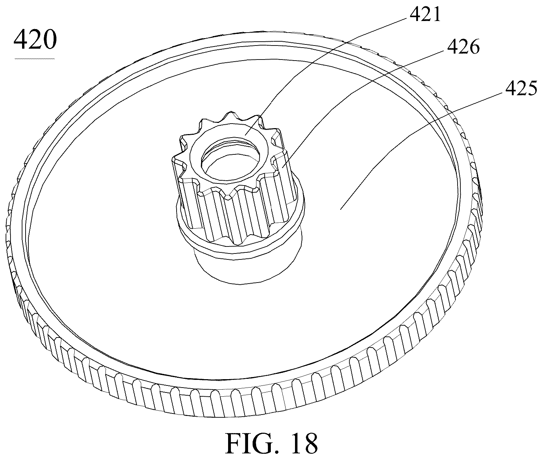

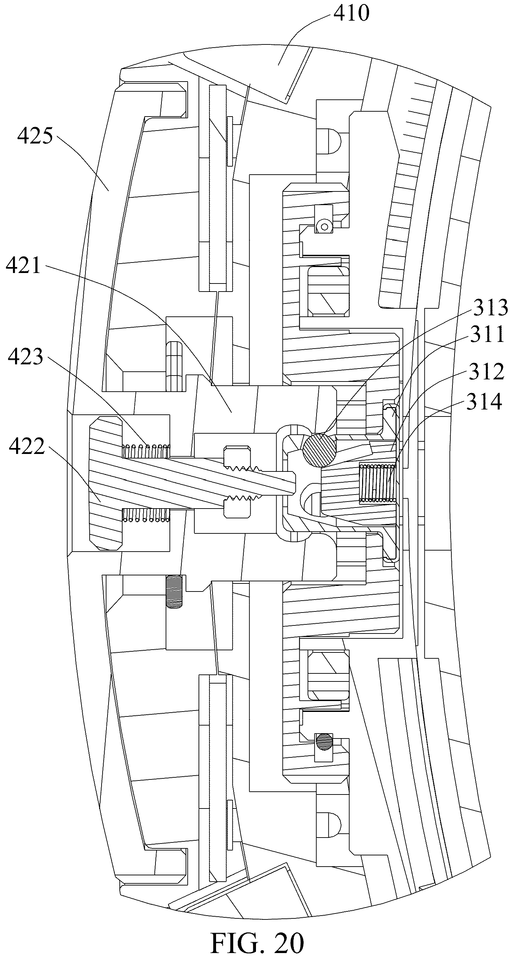

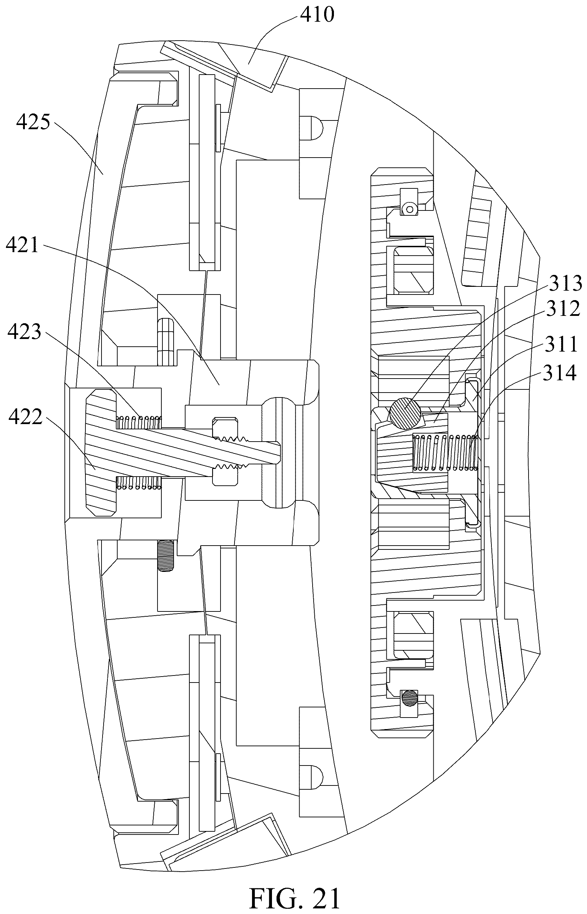

As shown in FIG. 1 to FIG. 21, an embodiment of the present application discloses a head-mounted electronic device, referred to as an electronic device below, and the head-mounted electronic device can be worn by a user on the head for use. As shown in FIG. 1 to FIG. 4, the head-mounted electronic device includes a device body 100, a strap, a functional part 300, and a first battery 400.

The device body 100 is a main part of the electronic device and includes a display part. The display part is used to provide an image and video display function. The display part may specifically include at least one display screen. Optionally, the device body 100 includes a housing 120, and the display part may be mounted inside the housing 120, or a part of the display part is located outside the housing 120. Certainly, the device body 100 may also include another structure such as a circuit board, which will not be described in detail herein for text conciseness.

Moreover, as described above, the electronic device includes the strap, and opposite ends of the device body 100 are connected to the strap. It can ensure that the user can use the electronic device by wearing the electronic device on the head. Specifically, the strap can be made of soft materials such as fabric. In addition, the strap can also be elastic, thereby making the electronic device adapt to the head sizes of different users. Specifically, a quantity of straps may be one or multiple. In a case that there is one strap, the opposite ends of the strap can be fixed to opposite ends of the device body 100 respectively by binding or looping, thereby making the device body 100 and the strap form a closed loop structure, which is convenient for the user to wear.

In a case that there are multiple straps, an optional implementation is that opposite ends of any strap of the multiple straps are correspondingly connected to opposite ends of the device body 100, thereby improving the wearing stability of the electronic device. In this case, the multiple straps are essentially equivalent to "one" strap. Alternatively, the multiple straps may be divided into two groups. One end of the device body 100 is connected to one end of the functional part 300 by using one group of straps, and the other end of the device body 100 is connected to the other end of the functional part 300 by using the other group of straps. In addition, in the case that the quantity of straps is one or equivalent to "one", the functional part 300 may be connected to the strap by penetrating through the outside of the strap.

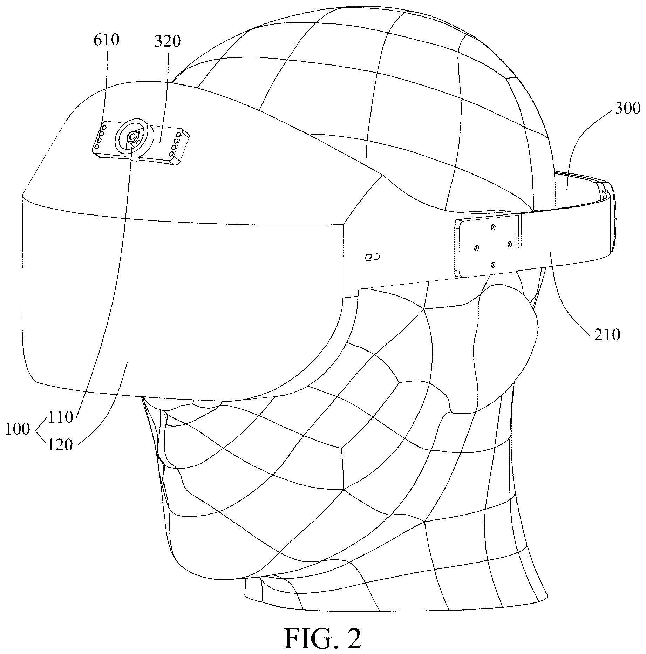

As described above, in a case that the quantity of straps varies, the functional part 300 may be mounted to the straps in different manners, and in a process of deploying the functional part 300, as shown in FIG. 2, the functional part 300 may be disposed opposite to the device body 100. More intuitively, in the process of using the electronic device, the user may wear the entire electronic device on the head by using the strap, and the device body 100 is located in front of the user's eyes. That is, the device body 100 is located at a front side of the user's head. On this basis, the functional part 300 is located at the rear of the user's head. Therefore, the functional part 300 is disposed opposite to the device body 100.

To resolve the problem that the user has different structural requirements for the head-mounted electronic device in different scenarios such as standing and reclining, in the head-mounted electronic device disclosed in the embodiments of the present application, at least one of the device body 100 and the functional part 300 is detachably connected to the first battery 400. Specifically, the device body 100 may be provided with a mechanism used to fit with the first battery 400, and the functional part 300 may be provided with a mechanism used to fit with the first battery 400. Then, when the user uses the electronic device in an upright state, the first battery 400 may be mounted on the functional part 300 to balance the weight of the device body 100 by using the weight of the first battery 400, so that the center of gravity of the entire electronic device is located as much as possible in an area in which the user's head is located. Correspondingly, when the user uses the electronic device in a reclining state, the first battery 400 may be mounted on the device body 100 so that relatively few structures are located at the rear of the user's head in the device, improving the wearing comfort of the electronic device.

It should be noted that, in the above electronic device, both the device body 100 and the functional part 300 can provide a mounting function for the first battery 400. That is, the first battery 400 may be mounted on the device body 100, or the first battery may be mounted on the functional part 300. More specifically, a quantity of first battery 400 may be one. In a case that the quantity of the first battery 400 is one, two sets of connection structures may be disposed on the first battery 400, and one set of the two sets of connection structures corresponds to the device body 100, and the other set of the two sets of connection structures corresponds to the functional part 300, thereby ensuring that the same first battery 400 can be mounted on both the device body 100 and the functional part 300.

Alternatively, multiple first batteries 400 may be provided, so that the connection structure provided on at least one first battery 400 can correspond to the device body 100, and the connection structure provided on at least another first battery 400 can correspond to the functional part 300. Moreover, in a case that the quantity of first batteries 400 is multiple, when using the electronic device, especially when the user is in an upright state, whether it is necessary to mount the first batteries 400 on both the device body 100 and the functional part 300 may be determined according to specific weights of the device body 100 and the first batteries 400, so as to maximally improve wearing stability of the electronic device.

In addition, to ensure that the same first battery 400 can be connected to both the device body 100 and the functional part 300, in another embodiment of the present application, the mechanism disposed on the device body 100 and the functional part 300 and used for mounting the first battery 400 may be the same. For example, a first mounting part 310 used to fit with the first battery 400 is disposed on the functional part 300, a second mounting part 110 used to fit with the first battery is disposed on the device body 100, and structures of the first mounting part 310 and the second mounting part 110 are the same and are equal in size. In this case, only one connection structure needs to be disposed on the first battery 400 to ensure that the same first battery 400 can be mounted on both the device body 100 and the functional part 300, reducing a quantity of connection structures required to be disposed on the first battery 400, reducing the processing difficulty of the first battery 400, and also reducing the processing difficulty of the device body 100 and the functional part 300. Certainly, it should be noted that, the first battery 400 fit with both the first mounting part 310 and the second mounting part 110 can be mounted on only one of the device body 100 and the functional part 300 at any time, or can be detached from both the device body 100 and the functional part 300.

An embodiment of the present application discloses a head-mounted electronic device. The head-mounted electronic device includes a device body 100 and a strap connected to opposites ends of the device body 100, so that the head-mounted electronic device can be worn by the user on the head for usage. Moreover, a functional part 300 is mounted on the strap, and the functional part 300 is disposed opposite to the device body 100. Meanwhile, at least one of the device body 100 and the functional part 300 may be detachably connected to the first battery 400 of the head-mounted electronic device, so that the mounting status of the first battery 400 can be adjusted according to the user's usage requirements. Specifically, in a case that the user uses the head-mounted electronic device in a reclining state, the first battery 400 may not be mounted on the functional part 300 located at the rear of the user's head to reduce a quantity and thickness of components padded under the user's head, improving the usage comfort of the device. In a case that the user uses the head-mounted electronic device in an upright or a sitting state, the first battery 400 may be mounted on the functional part 300 to balance the weight of the device body 100 by using the weight of the first battery 400, so that the center of gravity of the head-mounted electronic device is relatively closer to the center of the user's head, improving the wearing stability of the device.

As described above, the functional part 300 may be provided with the first mounting part 310. The device body 100 may be provided with the second mounting part 110. Both the first mounting part 310 and the second mounting part 110 may be detachably connected to the first battery 400. Based on this, the head-mounted electronic device has a first state and a second state. In a case that the head-mounted electronic device is in the first state, the first battery is detachably connected to the device body by the second mounting part. In a case that the head-mounted electronic device is in the second state, the first battery is detachably connected to the functional part by the first mounting part. Further, in the process of using the head-mounted electronic device, the state that the electronic device is in may be correspondingly selected according to actual requirements. In the case that the user's upper body is in the reclining state, the head-mounted electronic device works in the first state. In the case that the user's upper body is in the upright state, the head-mounted electronic device works in the second state. Therefore, in this case, in the present application, by changing the mounting position of the first battery, it can be ensured that the user can comfortably wear the head-mounted electronic device regardless of standing upright or lying down.

Further, in a case that the user needs to switch the usage state during use, the first battery 400 needs to be detached. For example, in a process of switching from the upright state to the reclining state, the user needs to detach the first battery 400 mounted on the functional part 300, so that when and after the first battery 400 is detached, the first battery 400 can no longer supply power to devices such as the display part. Based on this, to avoid a case that the device is shut down and the like and normal use of the user is affected because the electronic device is powered off when switching states, further, in the electronic device disclosed in the embodiment of the present application, the device body 100 also includes a second battery. The second battery is fixedly disposed in the device body 100 or the functional part 300. Correspondingly, the second battery is electrically connected to the display part. That is, in the embodiment of the present application, the electronic device includes a built-in second battery. Moreover, it can be ensured that even when the first battery 400 is detached, the second battery can be used to continuously supply power to the display part by continuously maintaining connection of the second battery to the electrical component such as the display part, thereby ensuring that the electronic device can continuously work when the usage state is switched. In addition, in a case that the embodiment of the present application is adopted, when the user has a light usage requirement, the first battery 400 may alternatively not be mounted on the device body 100 and the functional part 300, so that the weight of the entire electronic device is relatively small, reducing the user's load.

As described above, both the device body 100 and the functional part 300 may be provided with corresponding connection structures, so that both the device body 100 and the functional part 300 may be detachably connected to the first battery 400. Specifically, at least one of the device body 100 and the functional part 300 is provided with the first mounting part 310. In the above embodiment, the functional part 300 may be provided with the first mounting part 310, the device body 100 may be provided with the second mounting part 110, so that both the first mounting part 310 and the second mounting part 110 can be fixedly and detachably connected to the first battery 400. Specifically, both the first mounting part 310 and the second mounting part 110 are magnets, and the housing 120 of the first battery 400 may be formed by magnetic materials such as iron. Alternatively, the first battery 400 may be provided with a magnet to ensure that the first battery 400 can be detachably and fixedly connected to the first mounting part 310 and the second mounting part 110 separately by magnetic attraction.

In another embodiment of the present application, the first battery 400 may be detachably and fixedly connected to the first mounting part 310 (and the second mounting part 110 separately) by plugging. For ease of understanding, descriptions are provided below by using an example in which the first battery 400 is in fit with the first mounting part 310, and the first mounting part 310 is disposed in the device body 100. As described above, the second mounting part 110 and the first mounting part 310 may be components having the same structure and size. Further, for the fit relationship between the second mounting part 110 and the first battery 400, reference can be made to the fit relationship between the first mounting part 310 and the first battery 400.

Specifically, the first battery 400 may include a body 410 and a third mounting part 420, and the third mounting part 420 is a connection structure on the first battery 400. In a process of assembling the first battery 400 and the first mounting part 310, the third mounting part 420 may fit with the first mounting part 310 by plugging. Moreover, the structures of the first mounting part 310 and the third mounting part 420 are designed so that the first mounting part 310 and the first battery 400 have detachable and fixed connection capability, thereby achieving the purpose of detachably and fixedly connecting the first battery 400 and the first mounting part 310.

Specifically, one of the first mounting part 310 and the third mounting part 420 may include a plug. The other of the first mounting part 310 and the third mounting part 420 may include a socket. An elastic pressing component may be disposed in the socket so that the plug can be plugged into the socket under an external force and pressed by the elastic pressing device in the socket. As a result, the plug and the socket can form a relatively stable fixed connection without an external force. However, when the first mounting part 310 and the third mounting part 420 need to be detached, a pulling force may be applied to the plug, so that the plug overcomes the pressing force of the elastic pressing device in the socket to be detached from the socket, ensuring that the first mounting part 310 and the third mounting part 420 form a detachable and fixed connection capability. Certainly, the first mounting part 310 and the third mounting part 420 may also form a detachable fixed connection by adopting other structures, which will not be described one by one herein for text conciseness.

To improve reliability of the fixed connection relationship between the first mounting part 310 and the third mounting part 420, in another embodiment of the present application, the third mounting part 420 includes a limiting part 421, and the limiting part 421 has an inner cavity 4211. A limiting groove 4212 is provided on the side wall of the inner cavity 4211. That is, the inner cavity 4211 communicates with the limiting groove 4212. Also, the inner cavity 4211 extends through the limiting part 421 along an axial direction of the limiting part 421, thereby ensuring that a component other than the third mounting part 420 can fit with the limiting groove 4212 by extending into the inner cavity 4211 from one end of the inner cavity 4211.

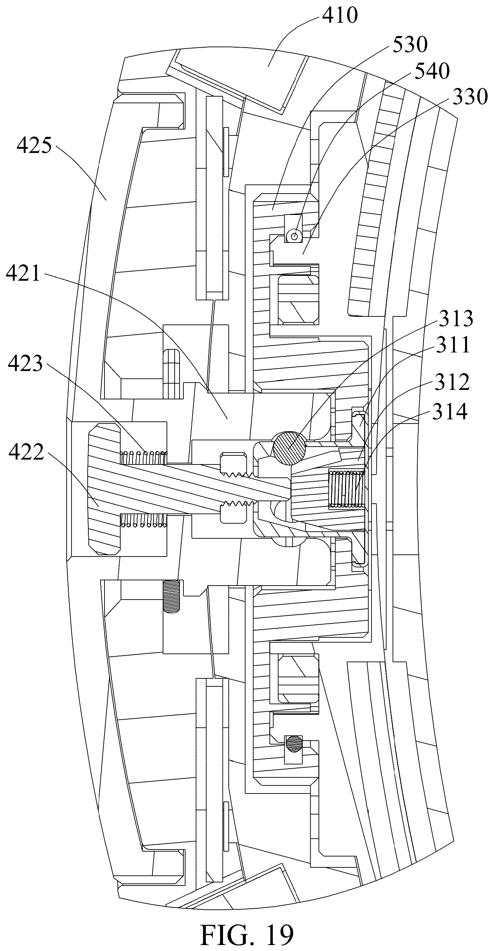

Specifically, as shown in FIG. 19 to FIG. 21, the limiting groove 4212 may be located in a middle area of the limiting part 421 along an axial direction of the limiting part 421. Alternatively, the limiting groove 4212 may be disposed close to one end of the limiting part 421. As above, the inner cavity 4211 of the limiting part 421 has a two-end opening structure. Therefore, a part used to fit with the limiting groove 4212 in the first mounting part 310 can extend into the inner cavity 4211 through one end opening of the inner cavity 4211 and form a limiting fit relationship with the limiting groove 4212 when moving to the limiting groove 4212, so that the first mounting part 310 and the third mounting part 420 are mutually fixed in an axial direction of the limiting part 421. Correspondingly, the other end opening of the inner cavity 4211 may facilitate detaching the first mounting part 310 and the third mounting part 420.

As described above, for example, the first mounting part 310 is disposed in the device body 100, and the third mounting part 420 is in the above structure, the first mounting part 310 may include a slider 312, a limiting piece 313, and a first elastic piece 314. The slider 312 is provided with a sliding groove 3121, and the sliding groove 3121 is used to provide a limiting track for movement of the limiting piece 313, so that the limiting piece 313 can be in sliding fit with the sliding groove 3121. Specifically, a first part of the limiting piece 313 is accommodated in the sliding groove 3121. The limiting piece 313 also includes a second part located outside the sliding groove 3121. The second part is connected to the first part. Moreover, by aligning the limiting piece 313 with the limiting hole 3113, a part of the second part can extend out of the limiting hole 3113.

The first elastic piece 314 is connected to the slider 312, so that the first elastic piece 314 can provide an elastic force to the slider 312, and the slider 312 can move along an elastic direction of the first elastic piece 314 without an external force. Specifically, the first elastic piece 314 may be made of elastic materials such as rubber. In a specific embodiment of the present application, the first elastic piece 314 is a spring. Also, the extension direction and specific structure of the sliding groove 3121 are designed, so that when the limiting piece 313 is located at different positions on the sliding groove 3121, the linear distance between the limiting piece 313 and the central axis of the first elastic piece 314 varies, and thus the limiting piece 313 has at least two states: a locked state and an unlocked state.

In the head-mounted electronic device disclosed in the above embodiment, in the case that the first mounting part 310 and the third mounting part 420 are detachably connected, the limiting part 421 is sleeved on the outside of the slider 312, and the first elastic piece 314 abuts against the slider 312 so that the sliding groove 3121 on the slider 312 is opposite to the limiting groove 4212, and the limiting piece 313 is clamped between the sliding groove 3121 and the limiting groove 4212 to limit the relative movement of the third mounting part 420 and the first mounting part 310 in a plugging direction.

In the process of detaching the first mounting part 310 and the third mounting part 420, one end opening away from the slider 312 in the inner cavity 4211 may be used to make a pin-shaped structure such as an external pin or a finger of the user extend into the inner cavity 4211, so that the slider 312 presses the first elastic piece 314, and the slider 312 is driven to move in an elastic direction of the first elastic piece 314, so that the limiting piece 313 moves in a direction away from the limiting groove 4212 while moving along the sliding groove 3121, releasing the limiting restriction between the third mounting part 420 and the first mounting part 310, and restoring the relative movement relationship between the third mounting part 420 and the first mounting part 310 in a plugging direction of the third mounting part 420 and the first mounting part 310.

As described above, the external pin may be used to extend into the inner cavity 4211 of the limiting part 421 and abut against the slider 312 to make the third mounting part 420 and the first mounting part 310 detached from each other. In another embodiment of the present application, the third mounting part 420 further includes a driving piece, and at least a part of the driving piece is located in the inner cavity 4211. Based on this, in the case that the first mounting part 310 and the third mounting part 420 are detachably connected, the slider 312 is located between the driving piece and the first elastic piece 314, making the driving force provided by the driving piece and the elastic force provided by the first elastic piece 314 act in opposite directions.

Correspondingly, in the process of detaching the first mounting part 310 and the third mounting part 420, the driving piece may be used to push the slider 312 to move relative to the limiting part 421, making the slider 312 press the first elastic piece 314, thereby making the limiting piece 313 move in a direction away from the limiting groove 4212 while moving along the sliding groove 3121, so as to detach the limiting piece 313 from the limiting groove 4212.

With the technical solutions in the embodiments of the present disclosure, the electronic device is provided with a component fitting with the slider 312 to drive the slider 312 to move, so that when the first battery 400 needs to be detached, no external object is needed, thereby greatly improving the usage convenience of the electronic device. Specifically, the driving piece may be an active driving piece, such as a linear motor or an air cylinder. Alternatively, the driving piece may be a passive piece, and when the user needs to detach the first mounting part 310 and the third mounting part 420, a driving force can be directly applied to the driving piece.

In a specific embodiment of the present application, the driving piece includes a button 422 and a second elastic piece 423. The button 422 is exposed to the first battery 400, so that it is convenient for the user to press the button 422. The button 422 is movably connected to the limiting part 421 by the second elastic piece 423, so that the button 422 can push the slider 312 under an external force. Based on the above embodiment, in the process of detaching the first mounting part 310 and the third mounting part 420, one end of the button 422 is pressed, so that the button 422 can move relative to the limiting part 421, thereby pushing the slider 312 to move relative to the limiting part 421, and pressing the slider 312 against the first elastic piece 314. Meanwhile, in the process of pressing the button 422, the button 422 may also press the second elastic piece 423, so that the second elastic piece 423 stores elastic potential energy. Correspondingly, after the above detachment is performed, the first mounting part 310 and the third mounting part 420 may be completely detached. In a case that the first mounting part 310 and the third mounting part 420 are completely detached, the pressing force of the button 422 is removed, so that the second elastic piece 423 tends to restore its own length under the action of the elastic potential energy, and the second elastic piece 423 also pushes the button 422 to reset. On one hand, it is convenient to detach the first battery 400 next time, and on the other hand, the appearance of the first battery 400 can maintain unchanged.

More specifically, a boss 440 may be provided on the inner wall of the inner cavity 4211 of the limiting part 421, and the button 422 includes a cap 4221. In this case, one end of the second elastic piece 423 may abut against the surface of the boss 440 of the limiting part 421, and the other end of the second elastic piece 423 may abut against the cap 4221. Certainly, to ensure that the button 422 is not detached from the limiting part 421 by the elastic force of the second elastic piece 423, one end of the button 422 away from the cap body may pass through the boss 440, and provide a clip 424 on a part of the side wall of the other side of the boss 440 in which the button 422 is located. Therefore, the button 422 is kept in the inner cavity 4211 of the limiting part 421 by the clip 424. Specifically, the clip 424 may be connected to the button 422 by means of bonding or the like. Alternatively, the clip 424 may be a nut, which is detachably mounted, in a manner of screwing, at the end of the button 422 away from the cap body 4221.

In the above embodiment, the slider 312 can move relative to the limiting part 421. Alternatively, the slider 312 can move relative to a base portion 350 of the functional part 300. The base portion 350 is a housing structure of the functional part 300. Further, to limit the moving path of the slider 312, a structure for limiting may be provided on the base portion 350. In another embodiment of the present application, the first mounting part 310 also includes a base body 311. The base body 311 is used to limit the slider 312, ensuring that the slider 312 can reliably move back and forth along the elastic direction of the first elastic piece 314.

The base body 311 may be fixed on the functional part 300 by means of bonding, clamping, welding, or screwing, and the fixed connection relationship between the base body 311 and the functional part 300 may be detachable or non-detachable, which is not limited in the present application. Also, the base body 311 is provided with an accommodating cavity 3111, a detaching hole 3112, and a limiting hole 3113. The accommodating cavity 3111 is configured to accommodate other components, such as the slider 312, in the first mounting part 310. The detaching hole 3112 has a similar function as the end opening of the inner cavity 4211 in the third mounting part 420, both of which are configured to facilitate detaching the first mounting part 310 and the third mounting part 420. The limiting hole 3113 is configured to limit the movement range of the limiting piece 313 in the first mounting part 310. While ensuring that a part of the limiting piece 313 can extend out of the base body 311 through the limiting hole 3113, the limiting hole 3113 prevents the limiting piece 313 from falling out of the limiting hole 3113, and that the third mounting part 420 fails to fit with the first mounting part 310 is avoided.

Specifically, the accommodating cavity 3111 is an inner empty cavity of the base body 311. The slider 312 and the first elastic piece 314 are both mounted in the accommodating cavity 3111. The detaching hole 3112 is provided at one end of the accommodating cavity 3111, and the detaching hole 3112 extends throughout the end wall of the base body 311. That is, the accommodating cavity 3111 can communicate with the outside of the base body 311 through the detaching hole 3112 located on the end wall of the base body 311. Correspondingly, a component outside the base body 311 may also extend into the accommodating cavity 3111 of the base body 311 through the detaching hole 3112. Certainly, the shape and size of the detaching hole 3112 are designed, the component such as the slider 312 mounted in the accommodating cavity 3111 may be prevented from falling out of the accommodating cavity 3111 through the detaching hole 3112.

Also, based on the above content, whether the other end of the accommodating cavity 3111 away from the detaching hole 3112 has an opening structure is not limited in the present application. In a case that the other end of the accommodating cavity 3111 away from the detaching hole 3112 is provided with an opening, the slider 312, the limiting piece 313, and the first elastic piece 314 may all be mounted in the accommodating cavity 3111 from the opening at the other end of the accommodating cavity 3111 away from the detaching hole 3112. However, in a case that the other end of the accommodating cavity 3111 away from the detaching hole 3112 is not provided with an opening, the base body 311 may be formed by split molding, and after the component such as the slider 312 is mounted in the accommodating cavity 3111 of the base body 311, two or more parts of the base body 311 are connected to each other, so as to mount the component such as the slider 312 in the accommodating cavity 3111.

The limiting hole 3113 extends throughout the side wall of the base body 311. That is, the limiting hole 3113 is disposed adjacent to the detaching hole 3112. The limiting hole 3113 is configured to fit with the limiting piece 313. Moreover, parameters such as the shape and size of the limiting hole 3113 are limited, so that it can be ensured that the limiting piece 313 does not fall from the limiting hole 3113 to the outside of the accommodating cavity 3111, thereby ensuring that the first mounting part 310 is an integral structural part.

As described above, the first elastic piece 314 may provide an elastic force for the slider 312, and based on the base body 311 having the above structure, in a process of assembling the first mounting part 310, to reduce the mounting difficulty of the first elastic piece 314, the first elastic piece 314 can provide a pushing force for the slider 312. In this case, at least a part of the slider 312 may be disposed at one end of the first elastic piece 314 close to the detaching hole 3112, and the other end of the first elastic piece 314 abuts against the end surface of the base body 311. In addition, a guide post or a guide hole may be provided on the slider 312 to provide a limiting and guiding function for the first elastic piece 314, preventing the first elastic piece 314 from being bent and deformed during the compression process, improving the service life of the first elastic piece 314.

Correspondingly, in a case that an external force in a direction opposite to an elastic direction of the first elastic piece 314 acts on the slider 312, the elastic force of the first elastic piece 314 may be overcome, and the slider 312 may move relative to the base body 311 in the accommodating cavity 3111. With the movement of the slider 312, the limiting piece 313 may also move relative to the slider 312 along the sliding groove 3121.

As described above, in a process in which the slider 312 moves along the elastic direction of the first elastic piece 314, the limiting piece 313 may be moved along the sliding groove 3121 of the slider 312, and the limiting piece 313 is moved close to or away from the limiting groove 4212. Specifically, the technical objective can be achieved by designing parameters such as the shape of the slider 312 or the depth of the sliding groove 3121.

More specifically, in a direction perpendicular to the elastic direction of the first elastic piece 314, a distance between one end of the sliding groove 3121 close to the detaching hole 3112 and the limiting hole 3113 may be greater than a distance between one end of the sliding groove 3121 away from the detaching hole 3112 and the limiting hole 3113. Further, when the limiting piece 313 moves along the sliding groove 3121, the fit state between the limiting piece 313 and the limiting hole 3113 may be changed. It should be noted that the sliding groove 3121 has a linear structure as a whole, to ensure that the limiting piece 313 can move relative to the slider 312 along an extension direction of the sliding groove 3121. In addition, the distance between the end of the sliding groove 3121 and the limiting hole 3113 in the direction perpendicular to the elastic direction of the first elastic piece 314 is specifically a distance between a groove bottom of the end of the sliding groove 3121 and the limiting space 3113. When the limiting piece 313 is located in the sliding groove 3121, the limiting piece 313 is in contact with the groove bottom of the sliding groove 3121.

With the above technical solutions, distances between opposite ends of the sliding groove 3121 and the limiting hole 3113 in a direction perpendicular to an axial direction of the detaching hole 3112 are different. That is, the extension direction of the sliding groove 3121 is obliquely disposed relative to the axial direction of the detaching hole 3112, so that when different positions of the sliding groove 3121 are directly opposite to the limiting hole 3113, distances are different. Further, in a process in which the slider 312 moves relative to the limiting hole 3113, a specific size of a part extending from the limiting hole 3113 of the limiting piece 313 may be changed.

Based on the above technical solutions, during the working process of the first mounting part 310, the first elastic piece 314 elastically abutting against the slider 312 can provide the elastic force for the slider 312, thereby limiting the position of the slider 312 in the accommodating cavity 3111, and further keeping the part of the second part of the limiting piece 313 extending out of the accommodating cavity 3111 through the limiting hole 3113 outside the accommodating cavity 3111. In this manner, a part of the limiting piece 313 protrude outside the base body 311 to use the part of the limiting piece 313 located outside the base body 311 to fit with the limiting groove 4212 of the third mounting part 420, thereby fixedly connecting the first mounting part 310 and the third mounting part 420 in the axial direction of the limiting part 421 of the third mounting part 420.

It should be noted that positions on which the force opposite to the elastic force direction of the first elastic piece 314 acts are the inner cavity 4211 of the limiting part 421 of the third mounting part 420 and the detaching hole 3112 on the base body 311 in the first mounting part 310. More specifically, the external pin or the component such as the button 422 may be used to extend from the end opening of the inner cavity 4211 of the limiting part 421 into the inner cavity 4211, making the button 422 extend into the accommodating cavity 3111 through the detaching hole 3112 to abut against the slider 312, and enabling the slider 312 to overcome the elastic force of the first elastic piece 314 to move relative to the base body 311.

In addition, to reduce the difficulty in detaching the limiting piece 313 from the limiting groove 4212 of the limiting part 421, at least one of the limiting piece 313 and the limiting groove 4212 of the limiting part 421 is provided with an arc-shaped guiding surface. More specifically, the limiting piece 313 may be a spherical-like structural piece, which can further reduce the movement difficulty of the limiting piece 313 and improve the fit smoothness among the components. Based on this, the limiting hole 3113 may be a circular hole, so that the limiting effect between the limiting piece 313 and the limiting hole 3113 is better, and the detaching difficulty of the limiting piece 313 and the limiting hole 3113 is relatively low. Certainly, the diameter of the limiting hole 3113 needs to be smaller than the diameter of the limiting piece 313. Based on this, the inner wall of the limiting groove 4212 may also be configured as a smooth-connected surface such as an arc, so as to reduce detaching difficult of the limiting piece 313 and the limiting groove 4212.

The first battery 400 in the head-mounted electronic device disclosed in the embodiments specifically includes a mounted state and a detached state. In a case that the first battery 400 is in the mounted state, a part of the second part of the limiting piece 313 extends from the limiting hole 3113 into the limiting groove 4212, so that the third mounting part 420 fits with the first mounting part 310, and the first mounting part 310 and the third mounting part 420 are relatively fixed in the axial direction of the detaching hole 3112, i.e. an axial direction of the inner cavity 4211. In this manner, the first battery 400 can be fixedly mounted on the functional part 300. In a case that the first battery 400 is in the detached state, at least a part of the second part of the limiting piece 313 is located inside the base body 311. That is, the limiting piece 313 is indented relative to the base body 311, so that a part of the limiting piece 313 located outside the base body 311 is reduced or even disappears. In this manner, the limiting piece 313 can no longer fit with the limiting groove 4212, and further the first mounting part 310 and the third mounting part 420 can restore the relative movement in the axial direction of the detaching hole 3112, and the first battery 400 can be detached from the functional part 300.

To further improve the fit stability between the limiting piece 313 and the limiting part 421, there are multiple limiting holes 3113, multiple limiting pieces 313, and multiple sliding grooves 3121, and the multiple limiting holes 3113, the multiple limiting pieces 313, and the multiple sliding grooves 3121 are disposed in a one-to-one correspondence. The multiple limiting holes 3113 are evenly distributed on the base body 311 around the axial direction of the detaching hole 3112, so that when the multiple limiting pieces 313 fit with the limiting groove 4212 of the limiting part 421, the reliability of the fit relationship between the base body 311 and the limiting part 421 can be improved, and the force uniformity between the base body 311 and the limiting part 421 can be improved.

In addition, in a case that a quantity of limiting pieces 313 is multiple, the limiting groove 4212 on the limiting part 421 may have a dotted structure, and a quantity of limiting grooves 4212 may be multiple. The quantity of limiting grooves 4212 is equal to or greater than the quantity of limiting pieces 313, it may be ensured that any limiting piece 313 can fit with the limiting groove 4212. Alternatively, in another embodiment of the present application, the limiting groove 4212 may also be a closed loop structural piece that may be specifically disposed around the inner wall of the inner cavity 4211 of the limiting part 421. It may also be ensured that any limiting piece 313 can fit with the limiting groove 4212. Also, during assembling the first mounting part 310 and the second mounting part 110, it is not necessary to align positions of the limiting pieces 313 and the limiting groove 4212, thereby reducing the mounting difficulty of the first battery 400.

As described above, the strap in the head-mounted electronic device disclosed in the embodiments of the present application may be made of materials such as elastic fabric. In this case, there may be one strap, and the strap is adaptable to users having different head circumferences by using the tightness adjustment ability of the strap. To further improve the wearing comfort of the user, in another embodiment of the present application, the strap is an inelastic structural piece, and the strap includes a first strap 210 and a second strap 220. One end of the device body 100 is adjustably connected to the functional part 300 by the first strap 210, and the other end of the device body 100 is adjustably connected to the functional part 300 by the second strap 220, so that the first strap 210 and the second strap 220 without elastic ability can also be adjusted to adapt to the users having different head circumferences.

Specifically, the first strap 210 and the second strap 220 may still be made of fabric. Certainly, the first strap 210 and the second strap 220 need to be made of fabric materials without elastic capability. In this case, an adjusting mechanism such as a buckle may be used to adjust the effective lengths of the first strap 210 and the second strap 220, so that the circumference of the assembly formed by the device body 100, the first strap 210, the functional part 300 and the second strap 220 can be adjusted to fit different users.

In another embodiment of the present application, other components may alternatively be used to enable the effective lengths of the first strap 210 and the second strap 220 to be adjusted. For example, the adjusting mechanism of the head-mounted electronic device disclosed in the embodiment of the present application may include a gear 510 and a rack 520 that match each other. The gear 510 is rotatably mounted on the base portion 350 of the functional part 300. At least one of the first strap 210 and the second strap 220 is mounted with the rack 520. The rack 520 is drivingly connected to the gear 510. Further, in a case that the gear 510 rotates, the purpose of adjusting the tightness of the corresponding strap by the rack 520 can be achieved.

More specifically, racks 520 are mounted on both the first strap 210 and the second strap 220, and the racks 520 are drivingly connected to the gear 510, thereby ensuring that both the first strap 210 and the second strap 220 have the tightness adjustment ability. Moreover, the same gear 510 may be used to drive the two racks 520 together so that the first strap 210 and the second strap 220 can be adjusted synchronously while reducing the adjustment difficulty, ensuring that the position of the functional part 300 is always relatively centered and improving the wearing comfort of the head-mounted electronic device.

As described above, the gear 510 is rotatably mounted on the functional part 300. Also, since the first battery 400 may also be mounted on the functional part 300, two areas may be separately designed on the functional part 300 to set the gear 510 and the first battery 400, so that the gear 510 and the first battery 400 do not interfere with each other.

Based on the embodiment in which the first battery 400 includes the body 410 and the third mounting part 420, and the third mounting part 420 is in plug-in fit with the first mounting part 310, so that the first battery 400 is detachably and fixedly connected to a first connection part 330, and the first battery 400 is mounted on the functional part 300, further, the fit relationship such as plug-in fit between the gear 510 and the third mounting part 420 may be formed, so that a relatively fixed relationship is formed between the gear 510 and the third mounting part 420 in the rotation direction of the gear 510, and further both the gear 510 and the third mounting part 420 can be disposed in the same area of the functional part 300. Moreover, while reducing the size limitation of the components due to the independent setting of the components, both the third mounting part 420 and the gear 510 can have the tightness adjustment ability of the first strap 210 and the second strap 220 through the rack 520. That is, with the above technical solutions, in the case that the first mounting part 310 is detachably connected to the third mounting part 420, the limiting part 421 of the third mounting part may be rotated to drive the gear 510 to rotate, thereby driving the strap to move when the gear 510 rotates.

In addition, with the above technical solutions, regardless of whether the first battery 400 is mounted on the functional part 300, the user can perform blind screwing at the same position while wearing the device to achieve the purpose of adjusting the tightness of the first strap 210 and the second strap 220, reducing the difficulty for the user in skillfully using the electronic device.

Specifically, a through hole or a blind hole may be provided at the center of the gear 510, and the inner wall of the through-hole or the blind hole is non-circular in shape. Further, the outer wall of the limiting part 421 of the third mounting part 420 and the inner wall of the through-hole or the blind hole have adaptable shapes and corresponding sizes, so that the limiting part 421 of the third mounting part 420 is plug-in fit with the gear 510 by plugging into the through-hole or the blind hole of the gear 510, and the limiting part 421 of the third mounting part 420 and the gear 510 form a relatively fixed relationship in the rotation direction of the gear 510. In this way, whether the gear 510 is directly rotated or indirectly rotated by rotating the limiting part 421 of the third mounting part 420, the purpose of adjusting the tightness of the first strap 210 and the second strap 220 by the rack 520 can be achieved.

In addition, in the above embodiment in which specific structures of the first mounting part 310 and the third mounting part 420 are defined, the first mounting part 310 may include structures such as a base body 311 and a slider 312, and during the fit process of the first mounting part 310 and the third mounting part 420, a part of the base body 311 of the first mounting part 310 extends into the inner cavity 4211 of the limiting part 421 of the third mounting part 420. Based on this, in a case that the gear 510 and the third mounting part 420 are in a plug-in fit and relatively fixed in the rotation direction of the gear 510, a through hole may be provided on the gear 510, and at least a part of the base body 311 of the first mounting part 310 extends out through the through hole to ensure that the base body 311 can still extend into the limiting part 421 located in the third mounting part 420.

More specifically, the size of the through hole of the gear 510 and the shape of the base body 311 are designed, so that the base body 311 can be limited between the gear 510 and the functional part 300 in the axial direction of the gear 510. For the fit relationship between the gear 510 and the base body 311 in the rotation direction of the gear 510, optionally, the gear 510 and the base body 311 are relatively fixed. That is, as the gear 510 rotates relative to the functional part 300, the base body 311 also rotates relative to the functional part 300.

In another embodiment of the present application, the base body 311 and the functional part 300 may be relatively fixed in the rotation direction of the gear 510, avoiding the case that a gap needs to be reserved for the base body 311 between the base body 311 and the functional part 300 to ensure that the base body 311 can move relative to the functional part 300, and the gap may cause a greater adverse impact on the limiting fit relationship between the limiting piece 313 and the limiting groove 4212 of the third mounting part 420. Based on this, to ensure that the limiting part 421 has the ability of rotating relative to the base body 311 with the gear 510, optionally, the shape of the inner cavity 4211 of the limiting part 421 and the shape of the outer wall of the base body 311 are both circular, ensuring that the base body 311 can rotate relative to the limiting part 421, and that the limiting piece 313 can always be in the limiting groove 4212.

As described above, in a case that the first battery 400 is not mounted on the functional part 300, the tightness of the first strap 210 and the second strap 220 may be adjusted by rotating the gear 510. In a case that the first battery 400 is mounted on the functional part 300, the tightness of the first strap 210 and the second strap 220 may be adjusted by rotating the limiting part 421 of the third mounting part 420. To further reduce the screwing difficulty of the gear 510 and the third mounting part 420, further, the adjusting mechanism may also include a first knob 530, and the first knob 530 may be mounted on the functional part 300. The gear 510 is fixed to one side of the first knob 530, so that the user may rotate the first knob 530 to drive the gear 510 to rotate, so as to drive the rack 520 to move.

Correspondingly, the third mounting part 420 further includes a second knob 425, and the second knob 425 is fixedly connected to the limiting part 421, so that the user may alternatively drive the gear 510 indirectly to rotate by the second knob 425, thereby reducing driving difficulty of the gear 510. Specifically, the first knob 530 is provided with a connection structure matching the limiting part 421, so that the limiting part 421 can be relatively fixed to the first knob 530 in the rotation direction of the gear 510 by the connection structure. That is, the limiting part 421 is driven to rotate by rotating the second knob 425, so that the limiting part 421 drives, by the above connection structure, the first knob 530 to rotate.

Specifically, both the first knob 530 and the second knob 425 may have a circular or near-circular structure. Moreover, to further reduce the screwing difficulty of the first knob 530 and the second knob 425, at least a part of the edge of the first knob 530 may extend out of the functional part 300, and at least a part of the edge of the second knob 425 may extend out of the body 410 of the first battery 400, so that the user may correspondingly apply a force to the first knob 530 and the second knob 425 by using the part of the first knob 530 extending out of the functional part 300 and the part of the second knob 425 extending out of the body 410 to drive the first knob 530 and the second knob 425 to rotate. In addition, a concave-convex structure may be provided on the outer edges of the first knob 530 and the second knob 425 to increase the friction between the user and the first knob 530 and the second knob 425, which can also achieve the purpose of reducing the driving difficulty of the first knob 530 and the second knob 425.

In a process of assembling the first knob 530 and the functional part 300, an annular clamping groove may be provided on the functional part 300, and multiple snaps are provided on the edge of the first knob 530. The multiple snaps all extend into the annular clamping groove, so that the first knob 530 and the functional part 300 are relatively fixed in the axial direction of the gear 510, mounting the first knob 530 on the functional part 300.

To reduce the thickness dimension of the electronic device in the axial direction of the gear 510, in another embodiment of the present application, the functional part 300 is provided with a connection part 330 protrudingly disposed, and the adjusting mechanism further includes a circlip 540. A first clip groove 533 is provided on the inner wall of the edge of the first knob 530. A second clip groove is provided on the outer surface of the connection part 330. One part of the circlip 540 is embedded in the first clip groove 533, and another part of the circlip 540 is embedded in the second clip groove, so that the first knob 530 and the functional part 300 are relatively fixed in the axial direction of the gear 510, thereby implementing the connection between the first knob 530 and the functional part 300.

More specifically, the circlip 540 may be made of materials with relatively strong anti-deformation capability, such as steel. The circlip 540 has an open loop structure. In a process of assembling the first knob 530, the circlip 540 may be expanded first and then sleeved on the outer periphery of the connection part 330 of the functional part 300, and the circlip 540 corresponds to the second clip groove. Then, the edge of the first knob 530 presses the circlip 540 to contract by applying a force to the first knob 530, so that the first knob 530 can move relative to the circlip 540 along the axial direction of the gear 510. Finally, the first slot 533 of the first knob 530 is aligned with the circlip 540. After the circlip 540 is restored from deformation, a part of a structure of the circlip 540 can extend into the first clip groove 533. In this way, the first knob 530 is fixedly connected to the functional part 300 in the axial direction of the gear 510.

Certainly, to facilitate detaching the first knob 530, the connection part 330 of the functional part 300 is also provided with a detaching through-hole. The detaching through-hole communicates with the second clip groove. Further, a fine pin-shaped device can extend into the detaching through-hole to apply a force to the circlip 540, so as to detaching the circlip 540, thereby implementing the detaching of the first knob 530 and the functional part 300.

As described above, the tightness of the first strap 210 and the second strap 220 may be adjusted by rotating the gear 510. To ensure that the first strap 210 and the second strap 220 can maintain the adjusted tightness without an external force, a damping structure may be disposed for the gear 510. Therefore, the gear 510 can only be rotated after being subjected to a sufficient external force, thereby preventing the tightness of the first strap 210 and the second strap 220 from being out of control.

In a specific embodiment of the present application, the adjusting mechanism also includes a self-locking piece 550. The self-locking piece 550 includes a base ring 551 and at least two elastic arms 552. The base ring 551 is an annular structural piece and is rotatably mounted in the connection part 330 of the functional part 300. Two elastic arms 552 are correspondingly elastically connected to the outer periphery of the base ring 551, and each elastic arm 552 is provided with at least one toothed structure. Also, the inner wall of the connection part 330 is provided with multiple ratchets 340, and the multiple ratchets 340 are evenly distributed along a peripheral direction of the connection part 330. The multiple ratchets 340 are all configured to fit with the toothed structure of the elastic arm 552. Moreover, when the self-locking piece 550 is not subjected to the force of the first knob 530, the self-locking piece 550 can fit with the ratchets 340 for limitation in the rotation direction of the gear 510.

Correspondingly, to ensure that the self-locking piece 550 does not limit the driving effect of the first knob 530, a toggle rib 560 is also disposed on one side of the first knob 530 on which the gear 510 is located. The toggle rib 560 is disposed between the two elastic arms 552 and is configured to fit with the elastic arms 552. Therefore, in a case that the first knob 530 rotates, the toggle rib 560 can rotate with the first knob 530 and press the corresponding elastic arm 552 to elastically deform towards the center of the base ring, so that the at least one toothed structure of the elastic arm 552 is detached from the ratchets 340. Moreover, driven by the toggle rib 560, the toothed structure of the other corresponding elastic arm 552 can continuously fit with the adjacent ratchets 340 in turn, so that the self-locking piece 550 is out of the self-locking state, thereby achieving the purpose of adjusting the tightness of the first strap 210 and the second strap 220. Moreover, by designing parameters such as the inclination angle between the ratchets 340 and the toothed structure, that the first strap 210 and the second strap 220 drive the gear 510 to rotate in the reverse direction when under force may be avoided. Certainly, to improve the reliability of the self-locking piece 550, multiple sets of elastic arms 552 and toggle ribs 560 can be provided, and multiple elastic arms 552 and multiple toggle ribs 560 are correspondingly disposed, so that one elastic arm 552 is disposed on each of both opposite sides of each toggle rib 560.

In the case that the first knob 530 is connected to the gear 510, and the third mounting part 420 includes the second knob 425, the limiting part 421 is clamped between the first knob 530 and the second knob 425, and to enable the first knob 530 and the limiting part 421 to form a relatively fixed relationship in the rotation direction of the gear 510, specifically, the first knob 530 is provided with a limiting cavity, and multiple first limiting structures 426 are provided on the outer periphery of the limiting part 421 of the third mounting part 420.

The limiting cavity includes a mounting hole 531. The first knob 530 is sleeved on the outer side of the limiting part 421 through the mounting hole 531. The inner side of the mounting hole 531 is provided with multiple second limiting structures 532 communicating with the mounting hole 531. The multiple second limiting structures 532 match the multiple first limiting structures 426, so that in the case that the first limiting structure 426 fits with the second limiting structure 532, the first knob 530 can rotate to drive the limiting part 421 and the gear 510 to rotate. Specifically, by designing specific structures and spatial shapes of the first limiting structures 426 and the second limiting structures 532, it can be ensured that in the case that the first limiting structures 426 are plug-in fit with the second limiting structures 532, the first knob 530 and the limiting part 421 can form a relatively fixed relationship in the rotation direction of the gear 510.

To reduce the plugging and fitting difficulty of the first knob 530 and the limiting part 421, the multiple second limiting structures 532 may be the same in shape and equal in size, and the multiple second limiting structures 532 are uniformly disposed around the mounting hole 531. Correspondingly, the multiple first limiting structures 426 are the same in shape and equal in size, and the multiple first limiting structures 426 are uniformly disposed around the limiting part 421. Moreover, each of the first limiting structures 426 corresponds one-to-one to the second limiting structure 532, and the corresponding first limiting structure 426 and the second limiting structure 532 are relatively fixed in the rotation direction of the gear 510, thereby achieving the purpose of synchronously rotate the first knob 530 and the second knob 425 which are plug-in fit.

More specifically, a cross-sectional shape of the second limiting structure 532 perpendicular to the axial direction of the gear 510 may be rectangular, triangular, or the like. In another embodiment of the present application, a cross-sectional shape of the second limiting structure 532 is a toothed structure. Correspondingly, the cross section of the first limiting structure 426 and the cross section of the second limiting structure 532 have the same shape and corresponding sizes, ensuring that after the first limiting structures 426 are plugged into the second limiting structures 532, the first limiting structures 426 and the second limiting structures 532 can form a limiting fit relationship in the rotation direction of the gear 510, so as to ensure that the second knob 425 can indirectly drive the gear 510 to rotate through the first limiting structure 426 via the first knob 530, achieving the purpose of adjusting the tightness of the first strap 210 and the second strap 220.

It should be noted that, a quantity of second limiting structures 532 may be equal to a quantity of first limiting structures 426. Alternatively, the quantity of second limiting structures 532 may be greater than the quantity of first limiting structures 426. In addition, an avoidance chamfer may be disposed at an opening of one end of the second limiting structure 532 away from the gear 510. That is, the avoidance chamfer is located at the outer side of the second limiting structure 532, so as to further reduce the plugging difficulty of the first limiting structure 426 and improve ease of use of the electronic device in the plugging and fitting process of the first limiting structure 426 and the second limiting structure 532.

Further, the quantity of first limiting structures 426 may be at least three and the quantity of second limiting structures 532 may be at least three. Moreover, when the impact on the processing difficulty is not significant, both the quantity of first limiting structures 426 and the quantity of second limiting structures 532 may be as large as possible. For example, the quantity of first limiting structures 426 may be ten or twelve, etc., and quantity of second limiting structures 532 may be ten or twelve, etc., so as to reduce the angle between each second limiting structure 532. Thus, when the second limiting structures 532 enable the first knob 530 and the second knob 425 to be plugged and fit, the fit difficulty between the first knob 530 and the second knob 425 can be reduced as much as possible.

In the technical solution in which the head-mounted electronic device adjusts the strap tightness by using the gear 510 and the rack 520, optionally, the functional part 300 is provided with the first mounting part 310, and the gear 510 may be sleeved on the first mounting part 310, so that the gear 510 can rotate around the first mounting part 310. Based on the above technical solutions, in the case that the first mounting part 310 is detachably connected to the third mounting part 420, the limiting part 421 of the third mounting part 420 is in plug-in fit with and limit the first mounting part 310, so that the limiting part 421 and the first mounting part 310 can be relatively fixed in the rotation direction of the gear.

Moreover, in the technical solution in which the head-mounted electronic device adjusts the strap tightness by using the gear 510 and the rack 520, the third mounting part 420 may also include the driving piece, and the limiting part 421 has an inner cavity 4211. The side wall of the inner cavity 4211 is provided with a limiting groove 4212. In the process of assembling the driving piece and the limiting part 421, at least a part of the driving piece is located in the inner cavity 4211.

Meanwhile, the first mounting part 310 includes a slider 312, a limiting piece 313, and a first elastic piece 314. The slider 312 is provided with a sliding groove 3121, the limiting piece 313 is disposed in the sliding groove 3121, and the first elastic piece 314 is connected to the slider 312.

Based on the above technical solutions, in the case that the first mounting part 310 is detachably connected to the third mounting part 420, the limiting part 421 is sleeved on the outer side of the slider 312, and the slider 312 is located between the driving piece and the first elastic piece 314. The first elastic piece 314 abuts the slider 312, so that the sliding groove 3121 can be opposite to the limiting groove 4212. Further, the limiting piece 313 is clamped between the sliding groove 3121 and the limiting groove 4212, to limit the relative movement of the third mounting part 420 and the first mounting part 310 in a plugging direction.

Correspondingly, in a process of detaching the first mounting part 310 and the third mounting part 420, a driving piece may be used to push the slider 312 to move, and the first elastic piece 314 is endowed with elastic potential energy. With the movement of the slider 312, the limiting piece 313 can move along the sliding groove 3121 and move in a direction away from the limiting groove 4212 to release the limiting restriction between the third mounting part 420 and the first mounting part 310, so that the third mounting part 420 and the first mounting part 310 can move relative to each other in a plugging direction.

As described above, to improve the fit stability between the third mounting part 420 and the first mounting part 310, the third mounting part 420 and the base body 311 of the first mounting part 310 may have relative rotation capability. In this case, to achieve the purpose of screwing the gear 510 by using the third mounting part 420, the third mounting part 420 and the body 410 of the first battery 400 also need to have relative rotation capability. Further, to enable the body 410 to form a more stable fit relationship with the functional part 300, optionally, one of the first mounting part 310 and the first battery 400 includes an anti-rotation limit protrusion 320, and the other of the first mounting part 310 and the first battery 400 is provided with an anti-rotation limit groove 431. The anti-rotation limit protrusion 320 is plug-in fit with the anti-rotation limit groove 431 and is in limiting fit in the direction around the plugging direction of the anti-rotation limiting protrusion 320 and the anti-rotation limiting groove 431. Thus, in a case that the first battery 400 is in an mounted state, by using the first mounting part 310 and the third mounting part 420 that fit with each other, a fixing function may be provided for the body 410 in the plugging direction, and by using the anti-rotation limiting protrusion 320 and the anti-rotation limiting groove 431 that fit with each other, a fixing function may be provided for the body 410 around the plugging direction, ensuring that the body 410 and the first mounting part 310 are relatively fixed in any direction. Specifically, the outer shape of the anti-rotation limiting protrusion 320 may be triangular, rectangular, elliptical, or the like, and the anti-rotation limiting groove 431 and the anti-rotation limiting protrusion 320 have the same shape and corresponding sizes.

As described above, the first battery 400 may be mounted on both the device body 100 and the functional part 300, and since the display part, which is an electrical component in the electronic device, is disposed on the functional body, the detachable first battery 400 needs to form an electrical connection relationship with the display part to ensure that the first battery 400 can supply power to the display part.

Optionally, in a specific embodiment of the present application, both the device body 100 and the functional part 300 are provided with a first electrical connection part 610. The first electrical connection part 610 is electrically connected to the display part. The first battery 400 includes a body 410 and a second electrical connection part 620. The body 410 is electrically connected to the second electrical connection part 620, and the second electrical connection part 620 can be electrically connected to the first electrical connection part 610, so that electric energy stored in the body 410 can be transmitted to the display part to ensure that the display part can work normally.

Specifically, the first electrical connection part 610 disposed on the device body 100 can directly form an electrical connection relationship with the display part through components such as a circuit board. The first electrical connection part 610 disposed on the functional part 300 can be electrically connected to the display part through a wire. Moreover, the wire may be embedded in the strap to prevent the wire from being exposed, thereby improving the security of the electronic device. More specifically, one of the first electrical connection part 610 and the second electrical connection part 620 includes an elastic electrical connection piece, which may be specifically a pogo pin. The other of the first electrical connection part 610 and the second electrical connection part 620 includes an electrical contact point, so that when the first battery 400 is mounted on the device body 100 (or the functional part 300), the first electrical connection part 610 and the second electrical connection part 620 can be in contact to directly form an electrical connection relationship, thereby simplifying the usage process of the electronic device.

As described above, one of the first battery 400 and the first mounting part 310 may be provided with the anti-rotation limiting protrusion, and the other of the first battery 400 and the first mounting part 310 is provided with the anti-rotation limiting protrusion 320. In a case that the body 410 of the first battery 400 supplies power by using the elastic electrical connection piece, optionally, both the anti-rotation limiting groove 431 and the elastic electrical connection piece may be disposed on the housing 430 of the first battery 400, and the elastic electrical connection piece is located in the anti-rotation limiting groove 431, thereby providing protection to the electrical connection relationship of the elastic electrical connection piece by using such a concave-convex matching structure, and further improving the safety of the electronic device.

In another embodiment of the present application, an electrical connection relationship may be formed between the first battery 400 and the display part in another manner. Specifically, the device body 100 is provided with an electrical connection jack 630, and the first battery 400 is electrically connected to the display part by a wire plugged into the electrical connection jack 630. In short, in this embodiment, the first battery 400 is electrically connected to the display part by using the wire. With this technical solution, regardless of whether the first battery 400 is in a mounted state, the first battery 400 connected to the display part by the wire can always supply power to the display part.

Specifically, the electrical connection jack 630 may be a Type-C jack or the like. Certainly, the electrical connection jack 630 may also have a hole structure in another form. Specifically, the electrical connection jack 630 may be disposed on one side of each of the device body 100 and the first battery 400. To reduce the mounting difficulty of the wire, electrical connection jacks 630 may be disposed on the opposite sides of the device body 100 and the first battery 400 so that when the device body 100 and the first battery 400 are connected by the wire, the mounting purpose of the wire can be achieved no matter from which side of the device body 100, and the wire can be prevented from winding.

Certainly, in the electronic device disclosed in another embodiment of the present application, the second electrical connection part 620 and the electrical connection jack 630 for plugging the wire may be disposed for the first battery 400 together, so that the first battery 400 may supply power to the display part in multiple manners. Moreover, with this technical solution, the wire may not be disposed in the strap. Also, in the case that the first battery 400 is mounted on the device body 100, the first battery 400 is electrically connected to the display part by the second electrical connection part 620; and in the case that the first battery 400 is mounted on the functional part 300, the first battery 400 can supply power to the display part by the wire, reducing the overall design difficulty of the electronic device.

It should be noted that in this specification, the term "include", "comprise", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. Without more limitations, an element defined by a sentence "including one..." does not exclude existence of other same elements in the process, the method, the object, or the apparatus that includes the element. In addition, it should be noted that a scope of the method and the apparatus in the implementations of the present application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

The embodiments of the present application are described above with reference to the accompanying drawings. However, this application is not limited to the specific implementations described above, and the specific implementations described above are only exemplary and not limitative. A person of ordinary skill in the art may make various variations under the teaching of the present application without departing from the spirit of the present application and the protection scope of the claims, and such variations shall all fall within the protection scope of the present application.

## Claims

1. A head-mounted electronic device, comprising a device body, a strap, a functional part, and a first battery, wherein the device body comprises a display part, and opposite ends of the device body are connected to the strap, and the functional part is mounted on the strap and is disposed opposite to the device body; and
at least one of the device body and the functional part is detachably connected to the first battery.

2. The head-mounted electronic device according to claim 1, wherein the functional part is provided with a first mounting part, and the device body is provided with a second mounting part; and
the head-mounted electronic device has a first state and a second state, wherein in a case that the head-mounted electronic device is in the first state, the first battery is detachably connected to the device body through the second mounting part; and in a case that the head-mounted electronic device is in the second state, the first battery is detachably connected to the functional part through the first mounting part.

3. The head-mounted electronic device according to claim 2, further comprising a second battery, wherein the second battery is fixedly disposed inside the device body or the functional part.

4. The head-mounted electronic device according to claim 1, wherein at least one of the device body and the functional part is provided with a first mounting part, and the first battery comprises a body and a third mounting part, wherein the third mounting part is in plug-in fit with the first mounting part to detachably and fixedly connect the first battery to the first mounting part.

5. The head-mounted electronic device according to claim 4, wherein the third mounting part comprises a limiting part, wherein the limiting part has an inner cavity, and a limiting groove is provided on a side wall of the inner cavity; and
the first mounting part comprises a slider, a limiting piece, and a first elastic piece, wherein the slider is provided with a sliding groove, the limiting piece is disposed in the sliding groove, and the first elastic piece is connected to the slider, wherein
in a case that the first mounting part is detachably connected to the third mounting part, the limiting part is sleeved on the outside of the slider, the first elastic piece elastically abuts against the slider so that the sliding groove is opposite to the limiting groove, the limiting piece is clamped between the sliding groove and the limiting groove to limit relative movement of the third mounting part and the first mounting part in a plugging direction of the third mounting part and the first mounting part; and
in a process of detaching the first mounting part from the third mounting part, the limiting piece is driven to move along the sliding groove in a direction away from the limiting groove to release limiting restriction between the third mounting part and the first mounting part.

6. The head-mounted electronic device according to claim 5, wherein the third mounting part further comprises a driving piece, and at least a part of the driving piece is located in the inner cavity, wherein
in the case that the first mounting part is detachably connected to the third mounting part, the slider is located between the driving piece and the first elastic piece; and
in the process of detaching the first mounting part from the third mounting part, the driving piece pushes the slider to move relative to the limiting part and presses the first elastic piece, making the limiting piece to move along the sliding groove in the direction away from the limiting groove.

7. The head-mounted electronic device according to claim 6, wherein the driving piece comprises a button and a second elastic piece, wherein the button is exposed on the first battery, and the button is movably connected to the limiting part via the second elastic piece;
in the process of detaching the first mounting part from the third mounting part, one end of the button is pushed to press the second elastic piece, and another end of the button pushes the slider to move relative to the limiting part; and
in the case that the first mounting part is completely detaching from the third mounting part, the second elastic piece pushes the button to reset.

8. The head-mounted electronic device according to claim 5, wherein the first mounting part further comprises a base body, wherein the base body is provided with an accommodating cavity, a detaching hole, and a limiting hole, wherein the detaching hole extends throughout an end wall of the base body, and the limiting hole extends throughout a side wall of the base body, a part of the limiting piece protrudes out of the base body through the limiting hole, and both the slider and the first elastic piece are mounted in the accommodating cavity.

9. The head-mounted electronic device according to claim 8, wherein at least a part of the slider is disposed at one end of the first elastic piece facing the detaching hole; and
in a direction perpendicular to the elastic direction of the first elastic piece, a distance between one end of the sliding groove close to the detaching hole and the limiting hole is greater than a distance between one end of the sliding groove away from the detaching hole and the limiting hole.

10. The head-mounted electronic device according to claim 4, further comprising an adjusting mechanism, wherein the adjusting mechanism comprises a gear and a rack matched with each other, the gear is rotatably mounted on the functional part, and the rack is connected to the strap; and
the third mounting part comprises a limiting part, wherein in a case that the first mounting part is detachably connected to the third mounting part, the limiting part is rotated to drive the gear to rotate synchronously, and rotation of the gear causes the rack to drive the strap to move.

11. The head-mounted electronic device according to claim 10, wherein the adjusting mechanism is disposed in the functional part, and the adjusting mechanism further comprises a first knob, wherein the first knob is rotatably mounted on the functional part, the gear is connected to the first knob, and the first knob is rotated to drive the gear to rotate so as to drive the rack to move.

12. The head-mounted electronic device according to claim 11, wherein the third mounting part further comprises a second knob fixedly connected to the limiting part, the first knob has a connecting structure matching the limiting part, the limiting part is relatively fixed to the first knob in a rotation direction of the gear through the connecting structure, the second knob is rotated to drive the limiting part to rotate, and the limiting part drives the first knob to rotate through the connecting structure.

13. The head-mounted electronic device according to claim 12, wherein the limiting part is clamped between the second knob and the first knob, a plurality of first limiting structures are provided on an outer periphery of the limiting part, the first knob has a mounting hole, and the first knob is sleeved on the outside of the limiting part through the mounting hole, a plurality of second limiting structures matching the first limiting structures are provided on an inner side of the mounting hole, the first limiting structures cooperate with the second limiting structures to make the first knob rotate to drive the limiting part and the gear to rotate synchronously.

14. The head-mounted electronic device according to claim 13, wherein a quantity of the first limiting structures is at least three and a quantity of the second limiting structures is at least three, and a relief chamfer is provided on the outside of each second limiting structure.

15. The head-mounted electronic device according to claim 11, wherein the functional part is provided with a protruding connection part, the adjusting mechanism further comprises a circlip, a first clamping groove is provided on an inner wall of an edge of the first knob, and a second clamping groove is provided on an outer surface of the connection part, a part of the circlip is embedded in the first clamping groove, and another part of the circlip is embedded in the second clamping groove, so that the first knob is detachably connect to the functional part in an axial direction of the first knob.

16. The head-mounted electronic device according to claim 15, wherein the adjusting mechanism further comprises a self-locking piece, a toggle rib is provided on a side of the first knob in which the gear is located, a plurality of circumferentially distributed ratchets are provided on an inner wall of the connection part, the self-locking piece is in limiting fit with the ratchets in a rotation direction of the gear, and the toggle rib is configured to drive the self-locking piece to rotate relative to the connection part as the first knob rotates.

17. The head-mounted electronic device according to claim 10, wherein the functional part is provided with the first mounting part, and the gear is sleeved on the first mounting part and rotates around the first mounting part; and
in the case that the first mounting part is detachably connected to the third mounting part, the third mounting part and the first mounting part are in plug-in limiting fit through the limiting part.

18. The head-mounted electronic device according to claim 10, wherein the third mounting part further comprises a driving piece, the limiting part has an inner cavity, a limiting groove is provided on the side wall of the inner cavity, and at least a part of the driving piece is located in the inner cavity; and
the first mounting part comprises a slider, a limiting piece, and a first elastic piece, wherein the slider is provided with a sliding groove, the limiting piece is disposed in the sliding groove, and the first elastic piece is connected to the slider, wherein
in the case that the first mounting part is detachably connected to the third mounting part, the limiting part is sleeved on the outside of the slider, the slider is located between the driving piece and the first elastic piece, the first elastic piece elastically abuts against the slider so that the sliding groove is opposite to the limiting groove, the limiting piece is clamped between the sliding groove and the limiting groove to limit relative movement of the third mounting part and the first mounting part in a plugging direction of the third mounting part and the first mounting part; and
in the process of detaching the first mounting part from the third mounting part, the driving piece pushes the limiting piece to move so that the limiting piece moves along the sliding groove in a direction away from the limiting groove to release limiting restriction between the third mounting part and the first mounting part.

19. The head-mounted electronic device according to claim 4, wherein one of the first mounting part and the first battery comprises an anti-rotation limiting protrusion, and another one of the first mounting part and the first battery is provided with an anti-rotation limiting groove, the anti-rotation limiting protrusion is in plug-in fit with the anti-rotation limiting groove, and the anti-rotation limiting protrusion and the anti-rotation limiting groove are in limiting fit in the direction around a plugging direction of the anti-rotation limiting protrusion and the anti-rotation limiting groove.

20. The head-mounted electronic device according to claim 1, wherein each of the device body and the functional part is provided with a first electrical connection part electrically connected to the display part, and the first battery comprises a second electrical connection part, wherein in a case that the device body or the functional part is detachably connected to the first battery, the first electrical connection part contacts the second electrical connection part to achieve electrical connection.
